(19) Europäisches Patentamt
European Patent Office
Office européen des brevets

(11) **EP 2 456 253 A1**

(12) **EUROPEAN PATENT APPLICATION**
published in accordance with Art. 153(4) EPC

(43) Date of publication:
**23.05.2012  Bulletin 2012/21**

(21) Application number: **10799383.4**

(22) Date of filing: **22.04.2010**

(51) Int Cl.:
**H04W 24/00** (2009.01)

(86) International application number:
**PCT/CN2010/072061**

(87) International publication number:
**WO 2011/006385 (20.01.2011 Gazette 2011/03)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **15.07.2009  CN 200910160002**

(71) Applicant: **ZTE Corporation**
**Shenzhen, Guangdong 518057 (CN)**

(72) Inventor: **MA, Zhongping**
**Guangdong 518057 (CN)**

(74) Representative: **Jansen, Cornelis Marinus et al**
**VEREENIGDE**
**Johan de Wittlaan 7**
**2517 JR Den Haag (NL)**

(54) **STATISTICAL METHOD AND DEVICE FOR BILL INFORMATION PERFORMANCE**

(57)  The present invention disclose a method and device for realizing the statistic operation of short message performance, wherein the method comprises: writing a statistic item and a statistic condition corresponding to the statistic item into a configuration file; saving the statistic item and the statistic condition in the configuration file to a memory; parsing the call record information saved in the memory according to the statistic item and the statistic condition, and generating statistic data. The present invention directly embodies the statistic item and statistic condition in the configuration file, which not only is convenient for maintenance and modification, but also shortens development time and reduces maintenance cost.

**Fig.1**

EP 2 456 253 A1

**Description**

**Field of the Invention**

The present invention relates to communication field, in particular to the method and device for realizing statistic operation of short message performance.

**Background of the Invention**

With the rapid development of wireless network, short message, as a popular function of a mobile phone, is indispensable to ordinary life. Among the whole wireless network architecture for realizing the short message function, the short message service center is a key network node which provides various basic data. A network operator (for example, China Mobile, China Unicom, and China Telecommunication, etc.) may employ these data to monitor the running state of the short message service center, report data for monthly and annually summarization, and monitor the short message service center equipment and make decision on whether to update and upgrade the equipment according to the data fluctuation, etc., wherein the data is referred to as performance statistic data.

The following terminologies are employed in the related art.

Short Message Service Center (SMSC), which is responsible for receiving, dispatching, retrying, and authenticating a short message and able to generate a short message record file for being used by a third party software (for example, a Query Analyed System (QAS)).

Query Analyzed System (QAS), which parses the short message record file, generates performance statistic data and saves them in a database for query and analysis.

Extend Short Message Entity (ESME), which comprises various information stations and manual information stations.

Call Record, which is the record file generated by the short message service center and comprises several records, each of which has a fixed length and a fixed format.

Statistic Group, which is the general designation of several statistic items with the same attribute.

Statistic Item, which is the basic unit able to demonstrate data at a terminal, and belongs to a statistic group and has a specific statistic condition.

Statistic Condition, which is a calculation expression for increasing a statistic item by a certain amount, for example, given that two values A and B are obtained from a record in a call record, in case that A>=B, the statistic item X is increased by 1, then the statistic condition of the statistic item X is A>=B, which is a simplest statistic condition.

Presently, the commercially available mode flow of realizing performance statistic function is that: a user utilizes a terminal such as a mobile phone or computer software (e.g., Fetion, etc.) to send a short message ; the SMSC dispatches the short message to the target user after receiving it and writes various information (such as the calling number, called number, message content, etc.) to a physical file, which is called a call record, with a fixed length format. The call record is transferred to the QAS through the File Transfer Protocol (FTP), and the statistic program of the QAS parses the call record based on the statistic items required by the operator and the statistic condition of the statistic item in the call record to generate statistic data and save them in a memory, and downloads the statistic data to the database for query and analysis.

During the program generating the performance statistic data, the QAS is the key part and widely commercialized. And it cooperates with the SMSC to provide the performance statistic data to the operator.

In this flow, the performance statistic data is a series of statistic items put forward by the operator, for example, those employed by the SMSC of the GSM network of China Mobile.

In the QAS of the related art, the statistic items and the statistic conditions corresponding to those statistic items are fixed to the statistic program. That is to say, the statistic program employs a series of codes of a program language (e.g., C Language). In this technology, a version of program can not be modified flexibly upon being put into operation.

However, with the rapid development of network, the operator's demand on data is continuously changing to a new one. Therefore new statistic item data is required to support project development. And the new demand for statistic item is continuously changing, for example, addition, deletion, modification, etc.

In addition, if a problem that a statistic condition is wrongly utilized occurs to the QAS program, the program will be updated with a new version in order to ensure data validity. If it is required to recover data and update version, a program of a new version will be re-compiled, developed, tested, and released; the upgrade file is to be complied; and the program is to be upgraded on site. The flow is very complicated and susceptible to making an error, results in a long time period for solving the problem and influences the usage by users.

Considering the problem of lengthening development period, maintenance cost, and inconvenience in modification resulted from statistic items and the statistic conditions corresponding to the statistic items being fixed in the program in the related art, there is not yet an effective solution.

**Summary of the Invention**

Considering the problem of lengthening development period, maintenance cost, and inconvenience in modification resulted from statistic items and the statistic conditions corresponding to the statistic items being fixed in the program in the related art, the present invention is provided. Therefore, the present invention provides a method and a device for realizing the statistic operation of short message performance so as to solve above problem.

A method for realizing the statistic operation of short message performance is provided according to one aspect of the present invention.

The method for realizing the statistic operation of short message performance according to the present invention comprises: writing a statistic item and a statistic condition corresponding to the statistic item into a configuration file; saving the statistic item and the statistic condition in the configuration file to a memory; and parsing call record information saved in the memory according to the statistic item and the statistic condition, and generating statistic data.

Further, the statistic item and the statistic condition are written into the configuration file in the format of: a field name of the statistic item, a data type of the statistic item, {a file type corresponding to the statistic item [time information of the call record, the statistic condition corresponding to the statistic item]}.

Further, before parsing the call record information saved in the memory, the method further comprises: periodically searching the memory to determine whether there exists statistic data; if yes, saving the existed statistic data in a database regularly or quantitatively; and if not, acquiring the call record information and saving the same in the memory.

Further, the statistic item and the statistic condition corresponding to the statistic item in the configuration file are compiled so as to update the statistic item and statistic condition.

Further, the call record information can be at least one of: a short message, a multimedia message, and wireless application protocol information.

A device for realizing the statistic operation of short message performance is provided according to another aspect of the present invention. The device comprises: a first configuration module adapted to write a statistic item and a statistic condition corresponding to the statistic item to a configuration file; a second configuration module adapted to save the statistic item and the statistic condition corresponding to the statistic item in the configuration file into a memory; a third configuration module adapted to save the call record information to the memory; and a parse module adapted to parse the call record information according to the statistic item and the statistic condition corresponding to the statistic item to generate a statistic increment and save it into the memory.

Further, the first configuration module is also adapted to write the statistic item and the statistic condition into the configuration file in the following format of: a field name of the statistic item, a data type of the statistic item, {a file type corresponding to the statistic item [time information of the call record, statistic condition corresponding to the statistic item]}.

Further, the parse module comprises: a search module adapted to periodically search the memory to determine whether there exists statistic data; a memory module adapted to regularly or quantitatively save the existed statistic data into the database when the search module determines that there exists statistic data; and a acquisition module adapted to acquire the call record information and save it into the memory when the search module determines that there is no statistic data.

Further, the first configuration module comprises: a compilation module adapted to compile the statistic item and the statistic condition corresponding to the statistic item so as to update the statistic item and the statistic condition.

Further, the device also comprises: a disassembly module adapted to disassemble the call record information after acquiring it from the memory, so as to send the disassembled call record information to the parse module.

The method and device for realizing the statistic operation of short message performance of the present invention employs the process of: writing the statistic item and the statistic condition corresponding to the statistic item into the configuration file; saving the statistic item and the statistic condition in the configuration file into the memory; generating statistic data according to the statistic item and the statistic condition saved in the call record information in the memory. It solves the problem of lengthening development period, maintenance cost, and inconvenience in modification resulted from statistic items and the statistic conditions corresponding to the statistic items being fixed in the program in the related art. Further, it directly includes the information of the statistic item and the statistic condition in the configuration file, which is convenient for maintenance and modification, shortens development time and reduces maintenance cost.

**Brief Description of the Drawings**

Drawings are provided for the further understanding of the present invention and form a part of the specification, which are used to explain the present invention in conjunction with the embodiments of the present invention rather than limit the present invention, wherein,

Fig.1 is the flow chart of the method for realizing statistic operation of short message performance according to an embodiment of the present invention;

Fig.2 is the block diagram showing the position of the QAS in the whole short message system according to an embodiment of the present invention;

Fig.3 is the flow chart of the statistic operation of the QAS according to a preferred embodiment of the present invention;

Fig.4 is the block diagram of the device for realizing statistic operation of short message performance according to an embodiment of the present invention; and

Fig.5 is the block diagram of the device for realizing statistic operation of short message performance according to a preferred embodiment of the present invention.

**Detailed Description of the Embodiments**

Considering the problem of lengthening development period, maintenance cost, and inconvenience in modification resulted from statistic items and the statistic conditions corresponding to the statistic items being fixed in the program in the related art, the present invention provides a method for realizing statistic operation of short message performance, which comprises: writing the statistic item and the statistic condition corresponding to the statistic item into the configuration file; saving the statistic item and the statistic condition in the configuration file into the memory; generating statistic data according to the statistic item and the statistic condition saved in the call record information in the memory; and saving the statistic data into the database.

It is to be noted that the embodiments of the present invention and features thereof can be combined if no conflict will be caused. The present invention will be described by way of example and in conjunction with the drawings.

A method for realizing statistic operation of short message performance according to the embodiments of the present invention is provided.

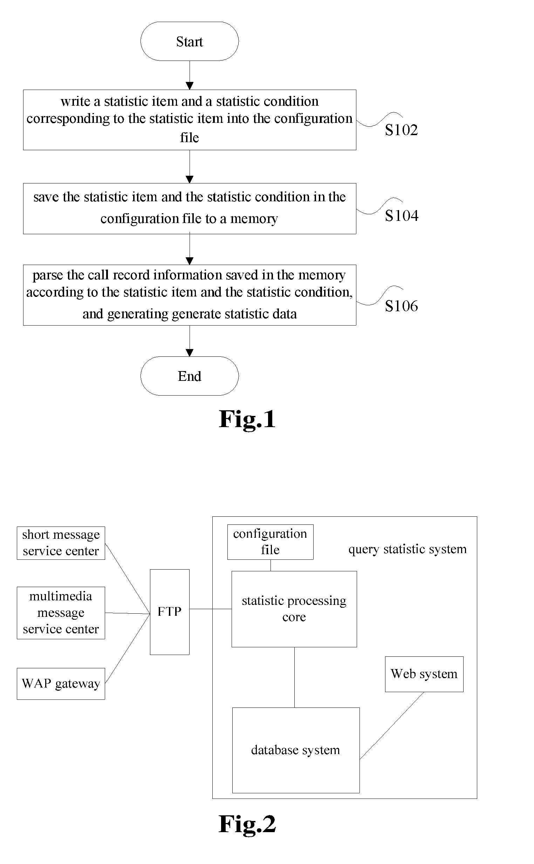

Fig.1 is the flow chart of the method for realizing statistic operation of short message performance according to an embodiment of the present invention.

As shown in Fig.1, the method comprises Step S102 to Step S106 as described below.

Step S102, write a statistic item and a statistic condition corresponding to the statistic item into the configuration file.

Step S104, save the statistic item and the statistic condition in the configuration file into a memory.

Step S106, parse the call record information saved in the memory according to the statistic item and the statistic condition, and generate statistic data.

The embodiment of the present invention employs the process of: writing the statistic item and the statistic condition corresponding to the statistic item into the configuration file, parsing the information of the call record saved in the memory, and generating a data statistic approach. It solves the problem of the statistic items and the statistic conditions corresponding to the statistic items being fixed in the program, inconvenience in modification, and augment in development period and maintenance cost in the related art, and the system performance is enhanced.

It is to be noted that, the operator may update saved (i.e., written) statistic item or statistic condition in the configuration file (for example, addition, deletion, modification, etc. of the statistic item). Thus it avoids the software update (i.e., upgrade) of QAS, and effectively reduce the maintenance cost.

The realization process of the embodiment of the present invention will be described hereinafter in detail in conjunction with examples.

Fig.2 is the block diagram showing the position of the QAS in the whole short message system according to an embodiment of the present invention.

As shown in Fig.2, the system mainly comprises: a SMSC (or a multimedia message service center, Wireless Application Protocol (WAP) gateway), a FTP module, a statistic program (processing core), a database system, and a WEB system, wherein the processing core is the statistic program which may comprise: a configuration module, a configuration readout module, a search module, a storage module, an acquisition module, a scan module, a disassembly module, a parse module, and a data download module.

In an implementation process, the FTP module needs to ensure that the call record is uploaded to the original directory read out by the QAS, and that the call record will not be lost during the FTP process, otherwise the data is very likely to be lost.

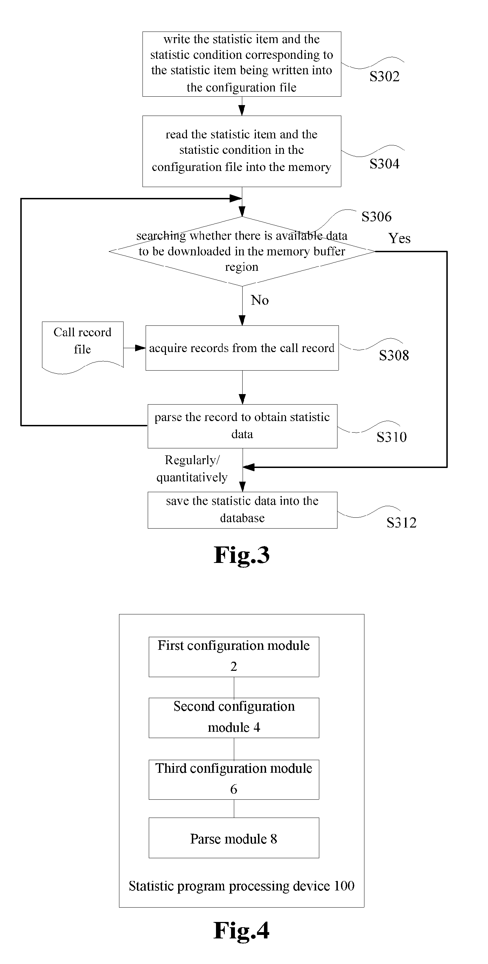

Fig.3 is the flow chart of the statistic operation of the QAS according to a preferred embodiment of the present invention, which comprises the following steps.

Step S302, the statistic items demanded by the operator are classified into respective statistic group according to the attributes, and are configured according to the format and data type in the configuration file, and the statistic items and the statistic conditions corresponding to the statistic items are written to the configuration file in a certain format, for example, in the configuration file, the configuration format of each statistic item may employ the following format:

$$\text{Item3=ommsuccent, int, \{ZXUT[TrcTime, (MO\&\& (PPS==1) )*DlvCount \ \ ]\}}.$$

Explanation for the format:

Item 3: the position of the statistic group to which the statistic item belongs;

Ommsuccent: the field name of the statistic item in the database, used as the statistic item appellation;

Int: the data type of the statistic item;

ZXUT: the file type corresponding to the statistic item, which is the shortened appellation of the call record in the program, i.e., from which call record;

TrcTime: time granularity of the file corresponding to the statistic item, which is originated from the call record; and

(MO && (PPS==1))*DlvCount: the statistic condition corresponding to the statistic item, having a format similar to that of a program compiled by an advanced language, that is to say, it employs operators such as: and (&&), or (II), nor (!), multiplication (*), division (/), plus (+), subtraction (-), greater-than (>), less-than (<), equal to (==), etc., and the result of such operations is used as an increment of the statistic item.

Step S304, start the statistic program system, and read the statistic item and the statistic condition in the configuration file into the memory. Specifically, a scan module may perform continuous scan in real time and the scanned call record is saved into the memory. For example, the statistic item and the statistic condition in the configuration file can be loaded into the memory and formatted into the organization form to realize the statistic item and the statistic condition configuration, so as to ensure the realization of the scheme.

Step S306, determine whether there is available data to be downloaded in the memory scanned by the system, if there is data to be downloaded, the flow goes to Step S312 to call the download module to perform download, otherwise goes to Step S308.

Step S308, parse the call record information to acquire the call record. During an implementation process, if no call record is acquired, the flow goes to Step S306. It is obvious that the system will delay for several seconds in the case that there is no data to be downloaded and there is no call record, so as to avoid that an over fast cycle burdens the system load.

Step S310, if the call record is acquired, a record will be created and parsed for statistic operation. At this time, each statistic item that needs to be counted will be counted with corresponding statistic condition, and the generated statistic result will be saved in the memory. For example, a data structure algorithm can be employed to locate the statistic increment at the position pointer of a statistic item in the memory, so as to ensure the scheme to be realized.

Preferably, the statistic program parses the call record, and each record obtained from the parse will be performed with statistic operation according to the statistic item and the corresponding statistic condition in the memory to generate statistic data (for example, one record can be acquired from the call record file and analyzed via a dynamic database to obtain a statistic data resource). The statistic operation is performed according to the statistic item and the statistic condition of the current call record configuration. The buffer region of the memory is searched for the statistic result, so as to find the position matching the time and parameter. The buffer region of the memory is searched for the statistic result, if the buffer region corresponding to the time and parameter is found, then increment operation is performed according to the statistic format of the configuration; if the buffer region is full, the data of the current buffer region is set as storage status.

Step S312, store the statistic data in the database. All records of the call record have been performed with statistic operation, the parse ends, and the flow goes to Step S306.

It is to be noted that, in the preferred embodiment of the present invention, the statistic program may save statistic data in the database regularly or quantitatively. The query page may provide time and parameter queries.

In above preferred embodiments, the realization process of the embodiments is described in detail. The statistic item and statistic condition are directly embodied in the configuration file, which not only is convenient for maintenance and modification, but also shortens development time and reduces maintenance cost. It is obvious that a QAS adapted to increasing statistic demands and flexible statistic condition modification is very important for the normal operation of the whole system.

According to an embodiment of the present invention, a device for realizing statistic operation of short message performance is also provided.

Fig.4 is the block diagram of the device for realizing statistic operation of short message performance according to an embodiment of the present invention.

As shown in Fig.4, the statistic program processing device 100 comprises: a first configuration module 2, a second configuration module 4, a third configuration module 6, and a parse module 8, whose structures will be detailed below.

The first configuration module 2 is adapted to write the statistic item and the statistic condition corresponding to the statistic item to the configuration file; the second configuration module 4, coupled to the first configuration module 2, is adapted to save the statistic item and the statistic condition corresponding to the statistic item in the configuration file into a memory; the third configuration module 6, coupled to the second configuration module 4, is adapted to save the call record information to the memory; and the parse module 8, coupled to the third configuration module 6, is adapted to parse the call record information according to the statistic item and the statistic condition corresponding to the statistic item to generate a statistic increment and save it into the memory.

Preferably, the first configuration module 2 is also adapted to write the statistic item and statistic condition into the configuration file in the following format: statistic item field name, statistic item data type, {file type corresponding to the statistic item [time information of the call record, statistic condition corresponding to the statistic item]}.

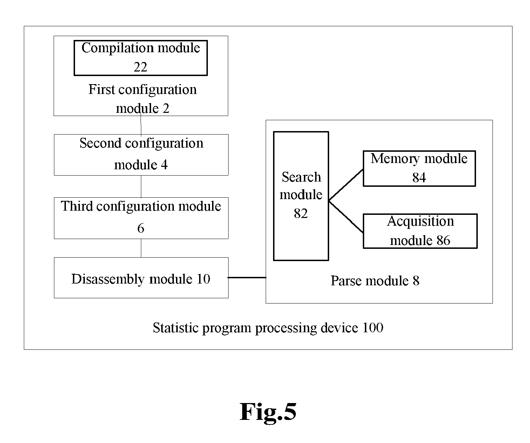

Fig.5 is the block diagram of the device for realizing statistic operation of short message performance according to a preferred embodiment of the present invention, as shown in Fig.5, the parse module 8 may further comprises: a search module 82, adapted to periodically search the memory to determine whether there exists statistic data; a memory module 84, coupled to the search module 82, and adapted to regularly or quantitatively save the existed statistic data into the database when the search module determines that there exists statistic data; an acquisition module 86, coupled to the search module 82, and adapted to acquire the call record information and save it into the memory when the search module 82 determines that there does not exist statistic data.

Preferably, the first configuration module 2 comprises a compilation module 22, adapted to compile the statistic item and the statistic condition corresponding to the statistic item so as to update the statistic item and the statistic condition.

Preferably, the device may also comprises: a disassembly module 10, coupled to the third configuration module 6 and the parse module 8, and adapted to disassemble the call record information after acquiring it from the memory, and send the disassembled call record information to the parse module 8.

In addition, the embodiments of the present invention not only can be applied to a short message system, but also can be applied to other systems utilizing call record to perform statistic operation, such as a multimedia message service center, a WAP network gateway, etc.

The embodiments of the present invention employs the approach of: writing the statistic item and the statistic condition corresponding to the statistic item into the configuration file, parsing the information of the call record saved in the memory, and generating a data statistic. It solves the problem of the statistic items and the statistic conditions corresponding to the statistic items being fixed in the program, inconvenience in modification, and augment in development period and maintenance cost in the related art. Thus the system performance can be enhanced and the system maintenance cost can be reduced.

Based on above description, by employing embodiments of the present invention, it is possible to effectively improve the work efficiency of the developer and maintenance personnel on site, and provide query and statistic service to users (operators) to the greatest possible extent.

Above description is to illustrate the preferred embodiments and not to limit the present invention. Various alterations and changes to the present invention are apparent to those skilled in the art. The scope defined in claims shall comprise any modification, equivalent substitution and improvement within the spirit and principle of the present invention.

**Claims**

1. A method for realizing the statistic operation of call record information performance, **characterized by** comprising:

writing a statistic item and a statistic condition corresponding to the statistic item into a configuration file;
saving the statistic item and the statistic condition in the configuration file to a memory; and
parsing call record information saved in the memory according to the statistic item and the statistic condition, and generating statistic data.

2. The method according to Claim 1, **characterized in that** the statistic item and the statistic condition are written into the configuration file in the format of:

a field name of the statistic item, a data type of the statistic item, {a file type corresponding to the statistic item [time information of the call record, the statistic condition corresponding to the statistic item]}.

3. The method according to Claim 1, **characterized in that** before parsing the call record information saved in the memory, the method further comprises:

periodically searching the memory to determine whether there exists statistic data;
if yes, saving the existed statistic data in a database regularly or quantitatively;
and if not, acquiring the call record information and saving the same in the memory.

4. The method according to Claim 1, **characterized in that** the method further comprises:

compiling the statistic item and the statistic condition corresponding to the statistic item in the configuration file so as to update the statistic item and the statistic condition.

5. The method according to any one of Claims 1-4, **characterized in that** the call record information can be at least one of: a short message, a multimedia message, and wireless application protocol information.

6. A device for realizing the statistic operation of call record information performance, **characterized by** comprising:

a first configuration module, adapted to write a statistic item and a statistic condition corresponding to the statistic item to a configuration file;
a second configuration module, adapted to save the statistic item and the statistic condition corresponding to the statistic item in the configuration file into a memory;
a third configuration module, adapted to save call record information to the memory; and
a parse module, adapted to parse the call record information according to the statistic item and the statistic condition corresponding to the statistic item to generate a statistic increment and save the same into the memory.

7. The device according to Claim 6, **characterized in that** the first configuration module is also adapted to write the statistic item and the statistic condition into the configuration file in the format of:

a field name of the statistic item, a data type of the statistic item, {a file type corresponding to the statistic item [time information of the call record, statistic condition corresponding to the statistic item]}.

8. The device according to Claim 6, **characterized in that** the parse module comprises:

a search module adapted to periodically search the memory to determine whether there exists statistic data;
a memory module adapted to regularly or quantitatively save the existed statistic data into a database when the search module determines that there exists statistic data; and
an acquisition module adapted to acquire the call record information and save the same into the memory when the search module determines that there is no statistic data.

9. The device according to Claim 6, **characterized in that** the first configuration module comprises:

a compilation module adapted to compile the statistic item and the statistic condition corresponding to the statistic item so as to update the statistic item and the statistic condition.

10. The device according to any one of Claims 6-9, **characterized in that** the device further comprises:

a disassembly module adapted to disassemble the call record information after acquiring the call record information from the memory, so as to send the disassembled call record information to the parse module.

Start

write a statistic item and a statistic condition corresponding to the statistic item into the configuration file — S102

save the statistic item and the statistic condition in the configuration file to a memory — S104

parse the call record information saved in the memory according to the statistic item and the statistic condition, and generating generate statistic data — S106

End

**Fig.1**

short message service center

multimedia message service center

WAP gateway

FTP

configuration file

query statistic system

statistic processing core

Web system

database system

**Fig.2**

**Fig.3**

**Fig.4**

**Fig.5**

# INTERNATIONAL SEARCH REPORT

| International application No. |
|---|
| PCT/CN2010/072061 |

### A. CLASSIFICATION OF SUBJECT MATTER

H04W 24/00 (2009.01) i

According to International Patent Classification (IPC) or to both national classification and IPC

### B. FIELDS SEARCHED

Minimum documentation searched (classification system followed by classification symbols)

IPC: H04W 24/-; H04W 88/-

Documentation searched other than minimum documentation to the extent that such documents are included in the fields searched

Electronic data base consulted during the international search (name of data base and, where practicable, search terms used)

CPRS;CNPAT;WPI;EPODOC: bill, information, performance, statistic+, condition, configuration, file, memory, data, field, database

### C. DOCUMENTS CONSIDERED TO BE RELEVANT

| Category* | Citation of document, with indication, where appropriate, of the relevant passages | Relevant to claim No. |
|---|---|---|
| A | CN1905408A （HUAWEI TECHNOLOGIES CO LTD） 31 Jan. 20007(31.01.2007) See the whole document | 1-10 |
| A | US7031733B2（SIEMENS COMMUNICATIONS INC） 18 Apr. 2006 （18.04.2006）See the whole document | 1-10 |
| P,X | CN101610531A （ZTE CORP） 23 Dec. 2009(23.12.2009) See the whole document | 1-10 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| **20 Jul. 2010(20.07.2010)** | **29 Jul. 2010 (29.07.2010)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>HAN,Xianping<br><br>Telephone No. (86-10)62411841 |
|---|---|

Form PCT/ISA /210 (second sheet) (July 2009)

**INTERNATIONAL SEARCH REPORT**
Information on patent family members

International application No.

PCT/CN2010/072061

| Patent Documents referred in the Report | Publication Date | Patent Family | Publication Date |
|---|---|---|---|
| CN1905408A | 31.01.2007 | CN100571074C | 16.12.2009 |
| US7031733B2 | 18.04.2006 | US2004082347A1 | 29.04.2004 |
| CN101610531A | 23.12.2009 | NONE | |

Form PCT/ISA /210 (patent family annex) (July 2009)